# EUROPÄISCHE PATENTSCHRIFT

(11) **EP 2 337 454 B1**
(45) Veröffentlichungstag und Bekanntmachung des Hinweises auf die Patenterteilung: **04.07.2012**
(21) Anmeldenummer: 09771274.9
(22) Anmeldetag: 19.10.2009
(51) Int. Cl.: A21C 1/02, A21C 1/06, A21C 1/14, A21D 8/02

(54) **VORTEIGANLAGE**
SPONGE SYSTEMS
INSTALLATION DE PRÉPARATION DE PRÉ-PÂTE

(30) Priorität: 20.10.2008 DE 102008052150
(43) Veröffentlichungstag der Anmeldung: 29.06.2011
(73) Patentinhaber: Köhler, Heinz-Gerd, 63911 Klingenberg (DE)
(72) Erfinder: Köhler, Heinz-Gerd, 63911 Klingenberg (DE)
(74) Vertreter: Simon, Josef
(86) Internationale Anmeldenummer: PCT/DE2009/001460
(87) Internationale Veröffentlichungsnummer: WO 2010/045930

(56) Entgegenhaltungen:
- EP-A1- 0 367 912
- EP-A1- 0 383 206
- EP-A1- 1 967 258
- CH-A5- 579 445
- DE-A1- 4 301 474
- FR-A- 1 507 155
- US-A- 3 033 132
- US-A- 3 620 173
- US-A- 4 630 930
- US-A- 4 883 361

## Beschreibung

Die Erfindung betrifft eine Vorteiganlage, mit einem Anmischer mit einem Rührwerk zum Vermischen von Mehl, Wasser und einem Ansatz, z. B. Hefe oder Enzym, zu einem Vorteig und einem mit dem Anmischer verbundenen, im Wesentlichen zylindrischen Lagertank.

In derartigen Anlagen werden Vorteige gemischt und anschließend einer Fermentation zur Ausbildung von Aroma und Geschmack unterzogen. Grundsätzlich wird zwischen Sauerteigen und Vorteigen unterschieden. Bei der Herstellung von Sauerteig ist die Bildung von Säure gewünscht, Sauerteig spielt vor allem bei der Verarbeitung von Roggenmehl eine Rolle. Demgegenüber stehen bei der Herstellung von Vorteigen Stärke- und Proteinabbauprodukte zur Erzeugung der gewünschten Produktqualität im Vordergrund.

Aus der DE 100 03 132 A1 ist eine Fermentierungsvorrichtung bekannt, die als senkrechtes, zylindrisches Silo ausgebildet ist, bei der der Teig über eine unterseitige Öffnung zugeführt wird. Im Inneren der Vorrichtung befinden sich Leitbleche, um den Teig beim Aufsteigen innerhalb des Silos zu vermischen. Der Teig kann anschließend an der Oberseite des Silos entnommen werden. In der Praxis ist es jedoch problematisch, eine homogene Konsistenz des Teigs sicher zu stellen, was dazu führen kann, dass die Produkteigenschaften sich verschlechtern.

In der DE 41 27 873 A1 wird eine Kneteinrichtung für die Herstellung von Sauerteig vorgeschlagen. Der Teig wird dabei in einem vertikalen Behälter von einem elektrisch angetriebenen, Rohrstangen aufweisenden Rotor geknetet, um eine innige Vermischung der Teigzutaten zu erzielen. Allerdings besteht auch bei dieser Kneteinrichtung die Gefahr, dass der in dem Mehl enthaltene Kleber ausgewaschen wird, wodurch sich die Teigstruktur in unerwünschter Weise verändert. Ein weiteres Problem ist darin zu sehen, dass eine exakte Temperaturführung des Teigs nicht möglich ist.

Aus der DE OS 30 09 401 ist eine Vorrichtung zum Reifen von Sauerteig bekannt. Der unreife Sauerteig wird aus einem Ansatzbehälter in einen Gärtank gegeben, der als senkrecht stehender Zylinder ausgebildet ist und in dem der Teig einer Reifung während eines bestimmten Zeitraums unterzogen wird. Allerdings bestehen auch bei dieser Vorrichtung die bereits erwähnten Probleme des Auswaschens des Klebers und der damit einhergehenden Veränderung der Teigstruktur.

Dokument US-A-3 033 132 offenbart eine Vorteiganlage gemäß dem Oberbegriff des Anspruchs 1.

Der Erfindung liegt daher die Aufgabe zugrunde, eine Vorteiganlage anzugeben, die eine schonende Vorteigführung ermöglicht, um qualitativ hochwertige Produkte herzustellen.

Zur Lösung dieser Aufgabe ist eine Vorteiganlage mit den Merkmalen des Anspruchs 1.

Der Erfindung liegt die Erkenntnis zugrunde, dass der für die Aroma- und Geschmackseigenschaften wesentliche Fermentationsprozess besonders schonend abläuft, wenn der Lagertank im Wesentlichen horizontal angeordnet ist. Dieser Effekt lässt sich dadurch erklären, dass bei dem horizontal angeordneten Lagertank praktisch keine mechanische Belastung des Vorteigs auftritt, die sich ansonsten in nachteiliger Weise bemerkbar macht, insbesondere bei vertikal angeordneten Lagertanks. Versuche haben gezeigt, dass mit der erfindungsgemäßen Vorteiganlage eine deutliche Qualitätssteigerung bei Weizenprodukten wie Brötchen oder Broten sowie bei feinen Backwaren wie Hefeteiggebäck, Croissants oder Stollen erzielt werden kann. Diese verbesserte Qualität macht sich durch eine Steigerung der Aromaintensität und ein längeres Frischhaltevermögen bemerkbar, ebenso sind die Backeigenschaften verbessert.

Eine weitere Verbesserung der erfindungsgemäßen Vorteiganlage kann erzielt werden, wenn der Lagertank ein Rührwerk aufweist. Mit dem Rührwerk kann die Homogenität des Vorteigs verbessert werden, allerdings ist darauf zu achten, dass die mechanische Belastung des Vorteigs durch das Rührwerk möglichst gering ist. Gemäß einer Variante der erfindungsgemäßen Vorteiganlage kann es vorgesehen sein, dass das Rührwerk als Schneckenrührwerk ausgebildet ist, durch das dem Vorteig eine Bewegungskomponente in Längsrichtung des Lagertanks vermittelt wird. Alternativ kann auch ein "einfaches" Rührwerk mit Wandabstreifern vorgesehen sein, um eine Durchmischung des Vorteigs zu erzielen.

Das Rührwerk kann bei der erfindungsgemäßen Vorteiganlage auch eingesetzt werden, um eine optionale Temperiereinrichtung des Lagertanks zu unterstützen. Mittels der Temperiereinrichtung kann die Temperatur des Vorteigs während des Fermentationsprozesses gesteuert werden, um Einflüsse durch sich ändernde Umgebungstemperaturen zu eliminieren und eine bestimmte Prozesstemperatur für die Fermentation einzustellen. Es kann daher vorgesehen sein, dass die Temperiereinrichtung einen doppelwandig ausgebildeten Lagertank umfasst, wobei der zwischen den beiden Wänden des Lagertanks gebildete Hohlraum mit einer temperierbaren Flüssigkeit befüllbar ist. Vorzugsweise kann Wasser als Flüssigkeit verwendet werden. Die Flüssigkeit wird auf die gewünschte Temperatur erwärmt oder gekühlt, sodass die Beibehaltung einer optimalen Prozesstemperatur sichergestellt ist. Vorzugsweise kann die Temperiereinrichtung so gesteuert werden, dass die Temperatur des Vorteigs zwischen 12 °C und 30°C gehalten wird.

In diesem Zusammenhang aufweist der Lagertank der erfindungsgemäßen Vorteiganlage wenigstens zwei Temperatursensoren zur Messung der Temperatur des Vorteigs und das Rührwerk in dem Lagertank wird eingeschaltet, wenn die Differenz der beiden von den Temperatursensoren erfassten Temperaturen einen vorgegebenen Grenzwert überschreitet. Vorzugsweise ist wenigstens ein Temperatursensor im Bereich der Innenwand des Lagertanks und wenigstens ein Temperatursensor im Bereich der Mitte des Lagertanks, in der Nähe der Drehachse des Rührwerks, angeordnet. Es ist auch möglich, dass jeweils mehrere in Längsrichtung des Lagertanks verteilt angeordnete Temperatursensoren vorhanden sind.

Bei der erfindungsgemäßen Vorteiganlage kann es vorgesehen sein, dass der erwähnte Grenzwert der Temperaturdifferenz, bei dessen Überschreitung das Rührwerk eingeschaltet wird, 2 °C bis 4 °C, insbesondere 3 °C beträgt.

Gemäß einer Weiterbildung der Erfindung kann es vorgesehen sein, dass der Lagertank wenigstens eine Öffnung zum Entnehmen des Vorteigs aufweist und zum Austragen des Vorteigs mit Überdruck beaufschlagbar ist. Wenn der Austragungsvorgang lediglich mittels Überdruck bewirkt wird, kann auf eine Pumpe oder dergleichen verzichtet werden, die wiederum die Struktur des Vorteigs beeinträchtigen würde.

Im Rahmen der Erfindung kann es auch vorgesehen sein, dass die Vorteiganlage eine Wägevorrichtung zum Dosieren des ausgetragenen Vorteigs aufweist. Das Austragen des Vorteigs kann mittels der Wägevorrichtung automatisch gesteuert werden.

Es ist auch möglich, dass der Anmischer ein erstes Rührwerk und wenigstens ein, vorzugsweise zwei zweite Rührwerke aufweist, wobei das erste Rührwerk und das wenigstens eine zweite Rührwerk mit unterschiedlicher Umdrehungsgeschwindigkeit betreibbar sind. Mit einem derartigen Anmischer wird ein Verklumpen des Weizenmehls beim Ansetzen des Vorteigs verhindert. Dabei wird es bevorzugt, dass das erste Rührwerk einen größeren Durchmesser als das wenigstens eine zweite Rührwerk aufweist, die beiden Rührwerke können auch miteinander kämmen. Wenn die erfindungsgemäße Vorteiganlage wenigstens zwei zweite Rührwerke aufweist, können diese gleichsinnig oder gegensinnig betrieben werden.

Weitere Vorteile und Einzelheiten der Erfindung werden anhand eines Ausführungsbeispiels unter Bezugnahme auf die Figuren erläutert. Die Figuren sind schematische Darstellungen und zeigen:
- Fig. 1: ein Ausführungsbeispiel einer erfindungsgemäßen Vorteiganlage in einer teilweise geschnittenen Seitenansicht; und
- Fig. 2: eine Vorderansicht der Vorteiganlage von Fig. 1.

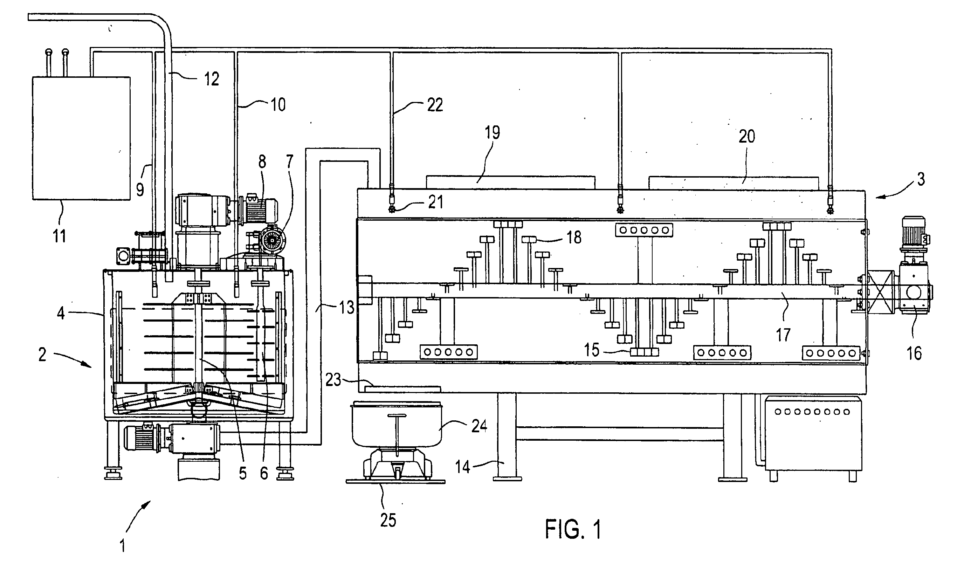

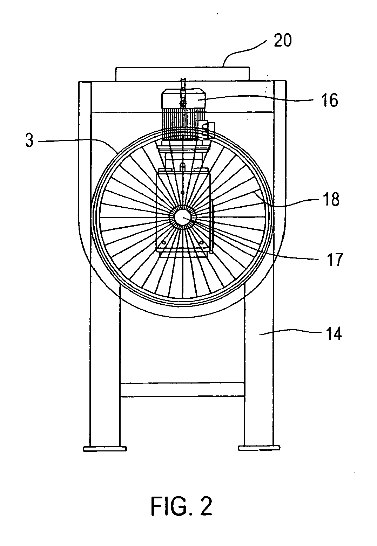

Die in den Fig. 1 und 2 gezeigte Vorteiganlage 1 besteht im Wesentlichen aus einem Anmischer 2 und einem Lagertank 3. Der in einer geschnittenen Ansicht gezeigte Anmischer 2 besteht aus einem zylindrischen Behälter 4, in dem Mehl und Wasser zu einem Vorteig vermischt werden. Im Inneren des Behälters 4 befindet sich ein erstes Rührwerk 5, das im Zentrum des Behälters 4 angeordnet ist, darüber hinaus befinden sich innerhalb des Behälters 4 zwei zweite Rührwerke 6, von denen in Fig. 1 lediglich eines gezeigt ist. Die Rührwerke 5, 6 weisen senkrecht zu ihren Antriebswellen angeordnete Rührarme auf, die miteinander kämmen. Das erste Rührwerk 5 ist größer als die zweiten Rührwerke 6 und wird mit höherer Geschwindigkeit als die zweiten Rührwerke 6 betrieben. Die Drehrichtung der zweiten Rührwerke 6 kann geändert werden, sodass diese sowohl gleichsinnig als auch gegensinnig betrieben werden können. Die beiden Rührwerke 5, 6 werden über elektrische Antriebe 7, 8 angetrieben.

Über Leitungen 9, 10 ist der Anmischer 2 mit einem Wassermischer 11 verbunden, über den dem Anmischer 2 Wasser zur Herstellung des Vorteigs mit einer gewünschten Temperatur zur Verfügung gestellt wird. Über eine Rohrleitung 12 ist der Anmischer 2 mit einer nicht gezeigten Mehlsiloanlage verbunden.

Zur Herstellung des Vorteigs wird der Anmischer 2 mit Wasser über die Leitungen 9, 10 und Mehl über die Rohrleitung 12 in der gewünschten Menge befüllt, ebenso wird Hefe mit einem Mengenanteil von 1 % bis 3 % zugegeben. Hierbei wird zunächst ein Ansatz, z. B. Hefe und/oder Enzym zugegeben, dann das ganze Wasser. Sodann werden die Rührwerke 5 und 6 eingeschaltet und das Mehl wird sukzessive dazudosiert. Das zentrale erste Rührwerk 5 bewegt sich relativ langsam im Vergleich zu dem zweiten Rührwerk 6, wodurch ein Verklumpen des Mehls verhindert wird. Der Rührvorgang ist nach wenigen Minuten abgeschlossen, anschließend wird in dem druckdicht verschlossenen Anmischer 2 ein Überdruck erzeugt, sodass der Teig unter dem Einfluss des Überdrucks über eine Rohrleitung 13 in den Lagertank 3 überführt wird.

Der Lagertank 3 weist eine zylindrische Grundform auf und ist im Wesentlichen horizontal auf einem Gestell 14 angeordnet. Es sind auch Ausführungen möglich, bei denen der Lagertank um bis zu 5° gegenüber der Horizontalen geneigt ist, um das Austragen des Vorteigs zu erleichtern. Nach dem Überführen des Vorteigs von dem Anmischer 2 in den Lagertank 3 wird der Vorteig 10 bis 15 Minuten mittels eines in dem Lagertank 3 angeordneten Rührwerks 15 zum Nachquellen gerührt. Das Rührwerk 15 umfasst eine mit einem elektrischen Antrieb 16 antreibbare Welle 17, die zentral in Längsrichtung des Lagertanks 3 angeordnet und an dem dem elektrischen Antrieb 16 gegenüberliegenden Ende gelagert ist. Wie in den Fig. 1 und 2 gezeigt ist, weist die Welle 17 eine aus Spiralenelementen bestehende Spirale 18 auf, wobei sich der radiale Abstand eines Spiralenelements von der Welle 17 zwischen zwei benachbarten Spiralenelementen jeweils ändert. Die Spirale 18 ist schraubenförmig ausgebildet, sodass bei drehender Welle 17 eine Durchmischung des Vorteigs stattfindet.

Der Lagertank 3 weist eine Temperiereinrichtung auf, wobei der Lagertank 3 doppelwandig ausgebildet ist und der zwischen den beiden Wänden gebildete Hohlraum mit einer temperierbaren Flüssigkeit befüllbar ist. In dem dargestellten Ausführungsbeispiel wird Wasser als Flüssigkeit verwendet. Bei der Vorteigführung ist es wünschenswert, dass die Temperatur des Vorteigs zwischen 12 °C und 30 °C gehalten wird. Dementsprechend kann das Wasser in dem Hohlraum des Lagertanks 3 auf die gewünschte Temperatur erwärmt bzw. abgekühlt werden, um den Vorteig entsprechend zu erwärmen oder abzukühlen. Der Vorteig liegt auf diese Weise auf einem Kühlbett, das durch die horizontale Anordnung des Lagertanks 3 eine vergleichsweise große Auflagefläche bietet, was zu einer schnellen und homogenen Erwärmung bzw. Kühlung führt. Darüber hinaus ist der auf den Vorteig einwirkende Druck bedeutend geringer.

Der Lagertank 3 weist mehrere in Fig. 1 nicht gezeigte Temperatursensoren auf, wobei wenigstens ein Temperatursensor im Bereich der Innenwand des Lagertanks 3 und wenigstens ein Temperatursensor im Bereich der Mitte des Lagertanks, beispielsweise auf der Welle 17, angeordnet ist. Über eine Steuerung wird ermittelt, ob die Differenz der beiden erfassten Temperaturen einen Grenzwert übersteigt, wobei der Grenzwert zwischen 2 °C und 4 °C liegen kann, in dem dargestellten Ausführungsbeispiel beträgt der Grenzwert 3 °C. Wenn dieser Grenzwert überschritten wird, wird der Vorteig von dem Rührwerk 15 bewegt, um eine homogene Temperaturverteilung sicherzustellen, ansonsten ruht der Vorteig. Während der Ruhezeit, die typischerweise 16 bis 24 Stunden beträgt, wird der Vorteig so wenig wie möglich bewegt, da der Rührvorgang zu mechanischen Belastungen des Vorteigs führt, die sich nachteilig auf die Qualität auswirken könnten.

An der Oberseite des Lagertanks befinden sich Entlüftungsklappen 19, 20, durch die während der Fermentation entstehendes Kohlendioxid austreten und Sauerstoff zugeführt werden kann. Im Inneren des Lagertanks 3 befinden sich Sprühköpfe 21, die über Leitungen 22 mit dem Wassermischer 11 verbunden sind und eine automatische Reinigung des Lagertanks 3 ermöglichen.

Wenn die erforderliche Ruhezeit des Vorteigs verstrichen ist, kann der Vorteig über eine schematisch dargestellte Öffnung 23 in einen Behälter 24 ausgetragen werden. Der Austragevorgang erfolgt unter dem Einfluss eines in dem Lagertank 3 wirkenden Überdrucks. Über eine Wägevorrichtung 25, die als Bodenwaage ausgebildet ist, kann die ausgetragene Menge des Vorteigs exakt dosiert werden.

Mit der in den Figuren 1 und 2 gezeigten Vorteiganlage können Vorteige hergestellt werden, die während der Produktion keine bzw. nur minimale mechanische Belastungen erfahren und daher qualitativ besonders hochwertig sind.

## Patentansprüche

1. Vorteiganlage (1), mit einem Anmischer (2) mit einem Rührwerk zum Vermischen von Mehl, Wasser und einem Ansatz zu einem Vorteig und einem mit dem Anmischer (2) verbundenen, zylindrischen Lagertank (3), wobei der Lagertank (3) horizontal oder um bis zu 5° gegenüber der Horizontalen geneigt angeordnet ist, wobei der Lagertank (3) ein Rührwerk (15) aufweist, **dadurch gekennzeichnet, dass** der Lagertank wenigstens zwei Temperatursensoren zur Messung der Temperatur des Vorteigs aufweist und das Rührwerk in dem Lagertank (3) eingeschaltet wird, wenn die Differenz der beiden von den Temperatursensoren erfassten Temperaturen einen vorgegebenen Grenzwert überschreitet.

2. Vorteiganlage nach Anspruch 1, **dadurch gekennzeichnet, dass** das Rührwerk (15) als Schneckenrührwerk ausgebildet ist.

3. Vorteiganlage nach einem der vorangehenden Ansprüche, **dadurch gekennzeichnet, dass** der Lagertank (3) eine Temperiereinrichtung aufweist.

4. Vorteiganlage nach Anspruch 3, **dadurch gekennzeichnet, dass** der Lagertank (3) doppelwandig ausgebildet ist und der zwischen den beiden Wänden gebildete Hohlraum als Bestandteil der Temperiereinrichtung mit einer temperierbaren Flüssigkeit befüllbar ist.

5. Vorteiganlage nach Anspruch 3 oder 4, **dadurch gekennzeichnet, dass** die Temperiereinrichtung derart ausgebildet ist, dass die Temperatur des Vorteigs zwischen 12°C und 30 °C gehalten wird.

6. Vorteiganlage nach einem der vorangehenden Ansprüche, **dadurch gekennzeichnet, dass** wenigstens ein Temperatursensor im Bereich der Innenwand des Lagertanks (3) und wenigstens ein Temperatursensor im Bereich der Mitte des Lagertanks (3) angeordnet ist.

7. Vorteiganlage nach einem der vorangehenden Ansprüche, **dadurch gekennzeichnet, dass** der Grenzwert der Temperaturdifferenz 2 °C bis 4 °C, insbesondere 3 °C, beträgt.

8. Vorteiganlage nach einem der vorangehenden Ansprüche, **dadurch gekennzeichnet, dass** der Lagertank (3) wenigstens eine Öffnung zum Entnehmen des Vorteigs aufweist und zum Austragen mit Überdruck beaufschlagbar ist.

9. Vorteiganlage nach Anspruch 8, **dadurch gekennzeichnet, dass** sie eine Wägevorrichtung (25) zum Dosieren des ausgetragenen Vorteigs aufweist.

10. Vorteiganlage nach einem der vorangehenden Ansprüche, **dadurch gekennzeichnet, dass** der Anmischer (2) ein erstes Rührwerk (5) und wenigstens ein, vorzugsweise zwei zweite Rührwerke (6) aufweist, wobei das erste Rührwerk (5) und das wenigstens eine zweite Rührwerk (6) mit unterschiedlicher Umdrehungsgeschwindigkeit betreibbar sind.

11. Vorteiganlage nach Anspruch 10, **dadurch gekennzeichnet, dass** das erste Rührwerk (5) einen größeren Durchmesser als das wenigstens eine zweite Rührwerk (6) aufweist.

12. Vorteiganlage nach einem der Ansprüche so oder, **dadurch gekennzeichnet, dass** bei zwei zweiten Rührwerken (6) diese gleichsinnig oder gegensinnig betreibbar sind.

## Claims

1. A pre-dough unit (1), with a mixer (2) comprising a stirrer for mixing flour, water and a preparation to form a pre-dough and a cylindrical storage tank (3) connected to the mixer (2),
wherein the storage tank (3) is arranged horizontally or inclined by up to 5° from the horizontal,
wherein the storage tank (3) provides a stirrer (15), **characterised in that**
the storage tank provides at least two temperature sensors for measuring the temperature of the pre-dough, and the stirrer in the storage tank (3) is switched on when the difference between the two temperatures registered by the temperature sensors exceeds a specified threshold value.

2. The pre-dough unit according to claim 1,
**characterised in that**
the stirrer (15) is embodied as a screw-type stirrer.

3. The pre-dough unlit according to any one of the preceding claims,
**characterised in that**
the storage tank (3) provides a tempering device.

4. The pre-dough unit according to claim 3,
**characterised in that**
the storage tank (3) is embodied with a double wall, and, as a component of the tempering device, the cavity formed between the two walls can be filled with a fluid capable of being tempered.

5. The pre-dough unit according to claim 3 or 4,
**characterised in that**
the tempering device is embodied in such a manner that the temperature of the pre-dough is held between 12°C and 30°C.

6. The pre-dough unit according to any one of the preceding claims,
**characterised in that**
at least one temperature sensor is arranged in the region of the internal wall of the storage tank (3) and at least one temperature sensor is arranged in the region of the middle of the storage tank (3).

7. The pre-dough unit according to any one of the preceding claims,
**characterised in that**
the threshold value for the temperature difference is 2°C to 4°C, specially 3°C.

8. The pre-dough unit according to any once of the preceding claims,
**characterised in that**
the storage tank (3) provides at least one opening for the removal of the pre-dough and can be supplied with a positive pressure for the discharge.

9. The pre-dough unit according to claim 8,
**characterised in that**
it provides a weighing device (25) for metering the pre-dough discharged.

10. The pre-dough unit according to any one of the preceding claims,
**characterised in that**
the mixer (2) provides a first stirrer (5) and at least one, preferably two, second stirrers (6),
wherein the first stirrer (5) and the at least one second stirrer (6) can be driven at different rotational velocity.

11. The pre-dough unit according to claim 10,
**characterised in that**
the first stirrer (5) provides a larger diameter than the at least one second stirrer.

12. The pre-dough unit according to any one of claims 10 or 11,
**characterised in that**,
in the case of two second stirrers (6), these can be driven in the same direction or in opposite directions.

## Revendications

1. Installation de préparation de pré-pâte (1), comprenant un mélangeur (2) doté d'un agitateur pour le mélange de farine, d'eau et un élément rapporté pour une pré-pâte et un réservoir de stockage (3) cylindrique, relié au mélangeur (2), le réservoir de stockage (3) étant disposé horizontalement ou incliné jusqu'à 5° par rapport à l'horizontale, le réservoir de stockage (3) présentant un agitateur (15), **caractérisée en ce que** le réservoir de stockage présente au moins deux capteurs de température pour la mesure de la température de la pré-pâte et l'agitateur est mis en route dans le réservoir de stockage (3) lorsque la différence des deux température enregistrées par les capteurs de température dépasse une valeur limite prédéfinie.

2. Installation de préparation de pré-pâte selon la revendication 1, **caractérisée en ce que** l'agitateur (15) est conçu sous forme d'agitateur à vis sans fin.

3. Installation de préparation de pré-pâte selon l'une des revendications précédentes, **caractérisée en ce que** le réservoir de stockage (3) présente un dispositif de mise à température.

4. Installation de préparation de pré-pâte selon la revendication 3, **caractérisée en ce que** le réservoir de stockage (3) est conçu avec une double paroi et la cavité, formée entre les deux parois, peut être remplie en tant que composant du dispositif de mise à température avec un liquide pouvant être mis à température.

5. Installation de préparation de pré-pâte selon la revendication 3 ou 4, **caractérisée en ce que** le dispositif de mise à température est conçu de telle sorte que la température de la pré-pâte est maintenue entre 12°C et 30°C.

6. Installation de préparation de pré-pâte selon l'une des revendications précédentes, **caractérisée en ce qu'**au moins un capteur de température est disposé dans la zone de la paroi interne du réservoir de stockage (3) et au moins un capteur de température dans la zone du centre du réservoir de stockage (3).

7. Installation de préparation de pré-pâte selon l'une des revendications précédentes, **caractérisée en ce que** la valeur limite de la différence de température va de 2°C à 4°C, est en particulier de 3°C.

8. Installation de préparation de pré-pâte selon l'une des revendications précédentes, **caractérisée en ce que** le réservoir de stockage (3) présente au moins une ouverture pour le prélèvement de la pré-pâte et peut être alimenté avec de la surpression pour l'évacuation.

9. Installation de préparation de pré-pâte selon la revendication 8, **caractérisée en ce qu'**elle présente un dispositif de pesée (25) pour le dosage de la pré-pâte évacuée.

10. Installation de préparation de pré-pâte selon l'une des revendications précédentes, **caractérisée en ce que** le mélangeur (2) présente un premier agitateur (5) et au moins un, de préférence deux seconds agitateurs (6), le premier agitateur (5) et le au moins un second agitateur (6) pouvant fonctionner avec une vitesse de rotation différente.

11. Installation de préparation de pré-pâte selon la revendication 10, **caractérisée en ce que** le premier agitateur (5) présente un diamètre plus grand que le au moins un second agitateur (6).

12. Installation de préparation de pré-pâte selon l'une des revendications 10 ou 11, **caractérisée en ce que**, sur deux seconds agitateurs (6), ceux-ci peuvent fonctionner dans le même sens ou dans le sens opposé.
